# EUROPEAN PATENT APPLICATION

(11) **EP 4 496 054 A1**
(43) Date of publication of application: **22.01.2025**
(21) Application number: 23898335.7
(22) Date of filing: 30.11.2023
(51) Int. Cl.: H01M 10/04, H01M 10/058

(54) **BATTERY CELL STACKING JIG FOR SECONDARY BATTERY**

(30) Priority: 02.12.2022 KR 20220166971
(71) Applicant: LG Energy Solution, Ltd., Seoul 07335 (KR)
(72) Inventor: PARK, Jin Woo, Daejeon 34122 (KR); KIM, Tae Geun, Daejeon 34122 (KR); HA, Hyeon Ju, Daejeon 34122 (KR)
(74) Representative: Plasseraud IP
(86) International application number: PCT/KR2023/019553
(87) International publication number: WO 2024/117811

(57) **Abstract**

Disclosed herein a battery cell stacking jig for stacking a plurality of battery cells of a secondary battery, the battery cell stacking jig includes a fork supporting both ends of the battery cells so that the plurality of battery cells are seated therein, and disposed in a plurality at a certain distance apart with respect to a horizontal direction; a gripper movably provided on an upper portion of the fork, and disposed in a plurality with respect to the horizontal direction to load a battery cell perpendicularly to the fork such that the battery cell is seated in the fork; and a TRF (Transfer) connected to the plurality of grippers to move the grippers to the upper portion of the fork, and the fork is to fix the battery cell by applying pressure on both sides of the thickness direction of the battery cell.

## Description

### [Technical Field]

The present invention relates to a battery cell stacking jig for a secondary battery.

More specifically, the present invention relates to a battery cell stacking jig for stacking a plurality of battery cells, wherein a variable structure is applied to a fork that vertically supports the battery cells to prevent the flow of the battery cells.

This application claims the benefit of priority based on Korean Patent Application No. 10-2022-0166971, filed on December 02, 2022, and the entire contents of the Korean patent application are incorporated herein by reference.

### [Background Art]

Recently, important trends in the development of the electronic industry can be summarized as the wireless and mobile trend of devices and the transformation of analog to digital. The rapid dissemination of wireless telephones (cell phones) and notebook computers, and the transition from analog to digital cameras are just a few examples.

Along with this trend, research and development of secondary batteries is actively progressing, and the types of applications that use secondary batteries are diversifying because of their advantages, and it is expected that secondary batteries will be applied to many more fields and products in the future than now.

Here, secondary batteries are gaining attention not only as portable devices such as mobile phones, laptops, camcorders, and the like, but also as energy sources for electric vehicles, hybrid electric vehicles, and the like, which are being proposed as a way to solve air pollution of conventional gasoline vehicles, diesel vehicles, and the like that use fossil fuels.

Generally, secondary batteries are classified according to the shape of the battery case into cylindrical and prismatic batteries, in which the electrode assembly is embedded in a cylindrical and prismatic metal can, and pouch-type battery cells, in which the electrode assembly is embedded in a pouch-type case of an aluminum laminated sheet.

Further, the electrode assembly embedded in the battery case is a power generating device capable of charging and discharging by comprising a positive electrode sheet, a negative electrode sheet, and a structure having a separator interposed between the positive electrode sheet and the negative electrode sheet, and is classified into a jellyroll type in which a separator is interposed between the positive electrode sheet and the negative electrode sheet in the form of a long sheet on which an active material is applied, and a stacked type in which a plurality of positive and negative electrode sheets formed in a predetermined size are stacked sequentially with the separator interposed.

Such secondary batteries are classified as lithium-ion batteries, lithium-ion polymer batteries, lithium polymer batteries, and the like according to the composition of the electrode and the electrolyte, and in general, the electrodes of such lithium secondary batteries are formed by applying a positive or negative electrode active material to a current collector such as an aluminum or copper sheet, mesh, film, foil, or the like and then drying it.

Meanwhile, the secondary battery is utilized in the form of a module by stacking at least one or more battery cells.

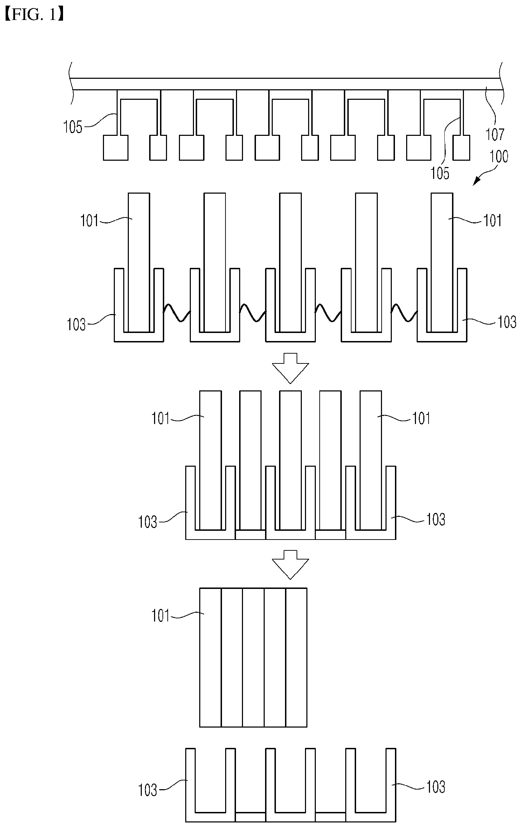

For this, as illustrated in FIG. 1, a stacking jig 100 for battery cells comprises a plurality of forks 103 spaced apart at regular intervals with respect to a thickness direction of the battery cells 101 such that each of the plurality of battery cells 101 is seated in the forks 103, a gripper for loading the battery cells 101 vertically toward the forks 103 such that each of the plurality of battery cells 101 is seated in the forks 103, and a gripper 105 connected to the plurality of grippers 105, and a Transfer (TRF) 107 connected to the plurality of grippers 105 to move the grippers 105 to an upper portion of the fork 103.

Then, the plurality of forks 103 are disposed to be movably disposed in a horizontal direction, which is the thickness direction of the battery cells 101, and to move the plurality of battery cells 101 in a horizontal direction after the battery cells 101 are seated in the forks 103 through an inlet of each fork 103 to stack the plurality of battery cells 101.

Here, an adhesive surface (not shown) is formed on the side of each of the battery cells 101 for stacking, and the respective adhesive surfaces of the battery cells 101 are mutually adhered to each other by the movement of each fork 103, and the stacked battery cells 101 are transported to a post-process through another gripper (not shown).

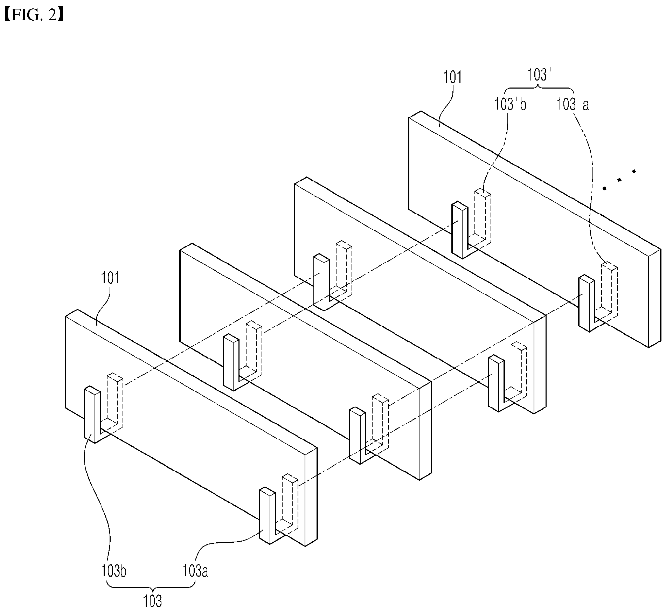

Meanwhile, as shown in FIG. 2, the forks 103 are arranged in pairs spaced apart at a regular interval in the length direction of the battery cell 101 to support the both ends of the battery cell 101, but one of the forks 103a, 103b is arranged at an angle to avoid mutual interference with the other fork 103'a, 103'b facing it, and in such an arrangement, the plurality of forks 103, 103' are arranged at a regular interval.

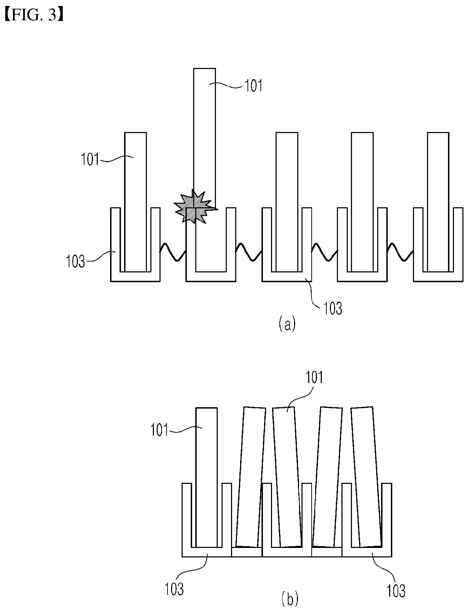

In the battery cell stacking jig of the secondary battery as described above, as shown in (a) of FIG. 3, there was a problem that a difference may occur between the position of the gripper and the position of the fork when each battery cell 101 is seated on the plurality of forks 103, which may cause the lower portion of the battery cell 101 to be bumped at the inlet of the fork 103 and damaged.

In order to solve the above-described problem, the width of the fork in which the battery cell is seated is formed to be larger than the thickness of the battery cell by reflecting the tolerance of the battery cell, thereby the battery cell is stably seated in the fork.

However, as shown in (b) of FIG. 3, there was a problem that by forming the width of the fork 103 to be larger than the thickness of the battery cell 101, the battery cell 101 seated in the fork 103 flows in the fork 103, and this caused a distortion in the alignment of the stacked battery cells, resulting in a decrease in the quality of the product.

(Patent Reference 1) Korean Registered Patent No. 10-1486232

### [Disclosure]

### [Technical Problem]

The present invention is directed to solving the above-mentioned problems, and to provide a stacking jig for battery cells that can prevent the flow of battery cells by improving the structure of a fork that vertically supports battery cells for stacking a plurality of battery cells, and prevent damage to battery cells when the battery cells are seated.

Further, the present invention is directed to provide a stacking jig for battery cells capable of improving the stacking quality of battery cells by applying a variable structure to a fork vertically supporting battery cells for stacking a plurality of battery cells, and capable of improving productivity and operability of a process line by providing a stacking jig for battery cells.

### [Technical Solution]

To realize the above-mentioned problems, the present invention provides, in a battery cell stacking jig for stacking a plurality of battery cells of a secondary battery, a fork supporting both ends of the battery cells so that the plurality of battery cells are seated therein, and disposed in a plurality at a certain distance apart with respect to a horizontal direction; a gripper movably provided on an upper portion of the fork, and disposed in a plurality with respect to the horizontal direction to load a battery cell perpendicularly to the fork such that the battery cell is seated in the fork; and a TRF (transfer) connected to the plurality of grippers to move the grippers to the upper portion of the fork, and the fork is to fix the battery cell by applying pressure on both sides of the thickness direction of the battery cell.

In one embodiment, the fork may include a seating portion in which a lower portion of the battery cell is seated, vertical portions extending perpendicularly from both ends of the seating portion, and pressure means provided on each opposing inner side of the vertical portions.

In a specific embodiment, the pressure means may include pressure plates installed opposite each other on an inner side of the vertical portion, and at least one elastic means connecting the pressure plates and the vertical portion such that each pressure plate elastically moves to apply pressure to both sides of the battery cell entering the fork.

In another specific embodiment, the upper and lower edges of the pressure plate contacting the lower portion of the battery cell may be rounded to have a curvature.

In another embodiment, the fork may include a seating portion in which the lower portion of the battery cell is seated, a vertical portion formed perpendicularly extending from one side of the seating portion, and movable pressing means provided at a lateral portion of the seating portion.

As a specific embodiment, the movable pressure means may include a moving portion formed vertically and movable in a horizontal direction with respect to the seating portion, a pressing plate installed on an inner side of the moving portion, and at least one elastic means connecting the pressure plate and the moving portion such that the pressure plate elastically moves and presses against one side surface of the battery cell entering the fork.

In another specific embodiment, a coupling groove is formed at the other end of the seating portion, a moving piece corresponding to the coupling groove is protruding from the inner lower portion of the moving portion, and with the moving piece coupled to the coupling groove, the moving portion can be moved in a horizontal direction with respect to the seating portion.

In another specific embodiment, the moving portion may be movable with respect to the seating portion by means of an air cylinder or a motor.

In another specific embodiment, the upper and lower edges of the pressure plate contacting the lower portion of the battery cell may be rounded to have a curvature.

As yet another specific embodiment, the lower portion of the gripper and the upper portion of the fork may each be provided with a position sensor.

### [Advantageous Effects]

The present invention improves a structure of a fork that vertically supports a battery cell for stacking a plurality of battery cells to prevent the flow of the battery cell, and to prevent damage and breakage of the battery cell entering the fork.

Further, by applying a variable structure to the fork that vertically supports the battery cells for stacking a plurality of battery cells, the stacking quality of the battery cells can be improved, and the productivity and operability of the process line can be improved.

### [Brief Description of the Drawings]

FIG. 1 is a diagram schematically illustrating a process for stacking battery cells in a battery cell stacking jig according to the prior art.
FIG. 2 is a perspective view schematically illustrating a battery cell seated on a fork of a stacking jig for battery cells according to the prior art.
FIG. 3 is a diagram schematically illustrating problems that can occur during the stacking process of battery cells using a stacking jig for battery cells according to the prior art.
FIG. 4 is a top view schematically illustrating a variable fork of a battery cell stacking jig of a secondary battery according to one embodiment of the present invention.
FIGS. 5 through 8 are drawings schematically illustrating the operation of a battery cell stacking jig of a secondary battery by one embodiment of the present invention.
FIG. 9 is a top view schematically illustrating a variable fork of a battery cell stacking jig of a secondary battery by another embodiment of the present invention.
FIGS. 10 to 14 are drawings schematically illustrating an operation process of a battery cell stacking jig of a secondary battery by another embodiment of the present invention.

### [Best Mode]

Hereinafter, the present invention will be described in detail. It is hereby understood that the terms or words used in this specification and in the claims of the patent are not to be construed in their ordinary or dictionary sense, but are to be construed with a meaning and concept consistent with the technical idea of the present invention, based on the principle that the inventor may define the concept of a term as he or she sees fit to best explain the invention. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present invention may refer to a horizontal direction, which may mean a thickness direction of the battery cell, and may refer to a vertical direction, which may mean a direction toward the gripper or a direction into the fork.

### (First embodiment)

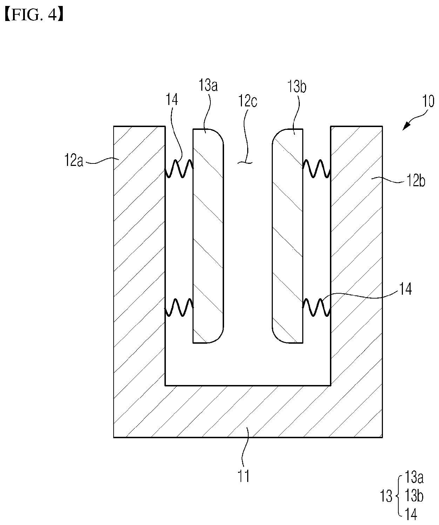

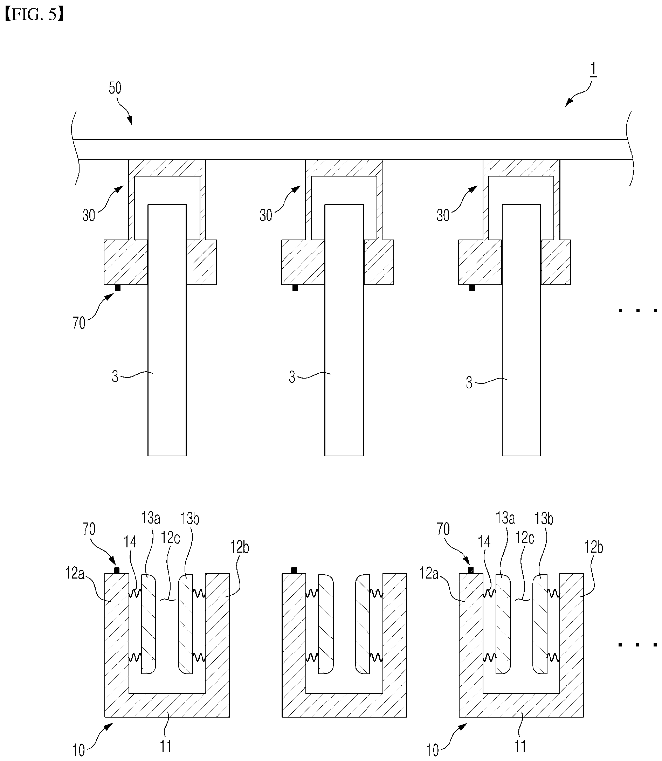

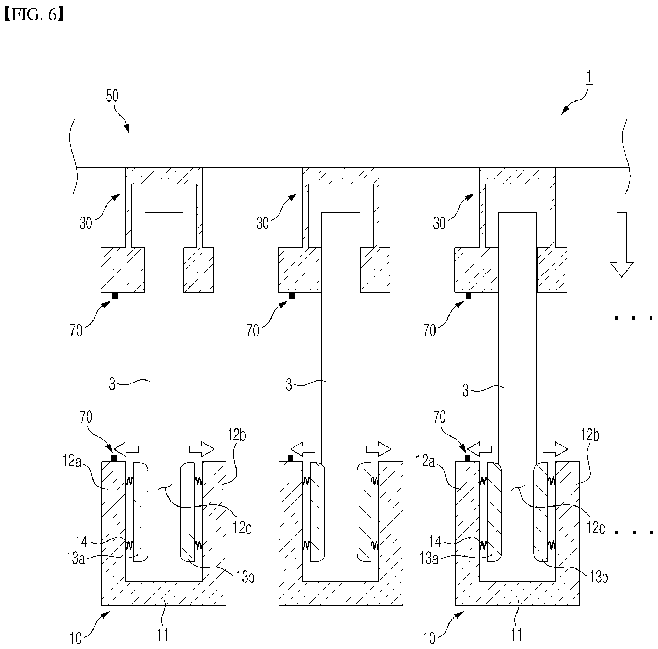

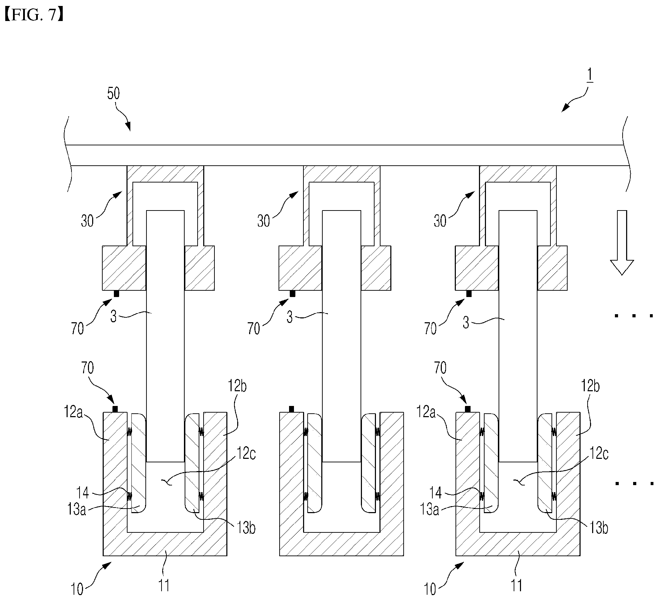

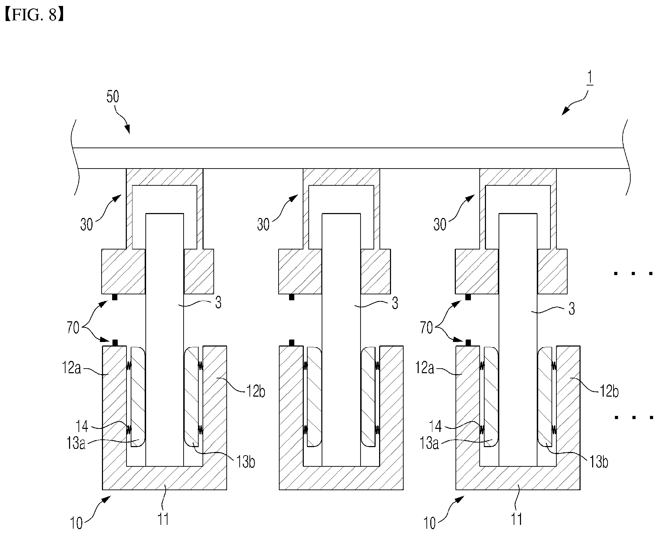

FIG. 4 is a top view schematically illustrating a variable fork of a battery cell stacking jig of a secondary battery according to one embodiment of the present invention. FIGS. 5 to 8 are drawings schematically illustrating the operation of a battery cell stacking jig of a secondary battery according to one embodiment of the present invention.

A battery cell stacking jig 1 according to one embodiment of the present invention, as shown in the drawings, comprises a fork 10 for supporting both ends of a battery cell 3 so that a plurality of battery cells 3 are seated thereon, and disposed in a plurality of spaced apart positions with respect to a horizontal direction, and movably mounted on an upper portion of the fork 10, a gripper 30 disposed in a plurality with respect to the horizontal direction to load the battery cell 3 perpendicular to the forks 10 so that it is seated within the forks 10, and a TRF (Transfer) 50 connected to the plurality of grippers 30 and movable to an upper portion of the forks 10, wherein the forks 10 hold the battery cell 3 under pressure on both sides in the thickness direction.

Here, the gripper 30 is arranged in a plurality to correspond to the spacing of the plurality of forks 10 and is vertically loadable for installing the battery cell 3 within the forks 10. For this, the gripper 30 may comprise a vertically movable elevating rail structure.

In addition, the TRF 50 may be made of a guide rail structure movable in the horizontal direction in order to move the plurality of grippers 30 to the upper portion of the fork 10. Here, the horizontally and vertically movable structure is a general structure, and therefore, a detailed description will be omitted hereinafter.

The forks 10 are disposed in pairs, spaced apart by a certain distance in the longitudinal direction of the battery cell 3 to support both ends of the battery cell 3. Here, one of the forks 10 is disposed out of alignment with the other fork 10 to avoid mutual interference.

Further, the plurality of forks 10 are movable with respect to a horizontal direction for stacking a plurality of battery cells 3.

Specifically, the forks 10 may include a seating portion 11 on which the lower portions of the battery cells 3 are seated, vertical portions 12a, 12b extending vertically toward the gripper 30 at both ends of the seating portion 11, and pressing means 13 provided on opposite inner sides of each of the vertical portions 12a, 12b.

Here, a battery cell 3 enters the inlet 12c between the respective vertical portions 12a, 12b, and the lower portion of the entered battery cell 3 is seated on the upper portion of the seating portion 11, and both sides in the thickness direction of the battery cell 3 are pressed against the pressure means 13.

The pressure means 13 may include pressure plates 13a, 13b installed opposite each other on the inner side of each vertical portion 12a, 12b, and at least one or more elastic means 14 connecting the pressure plates 13a, 13b and the vertical portions 12a, 12b such that each of the pressure plates 13a, 13b moves elastically with respect to the thickness direction of the battery cell 3 entering the fork 10.

In one embodiment of the present invention, the elastic means 14 comprises springs, but various modifications are possible.

In accordance with the structure as described above, the lower portions on both sides of the battery cell 3 entering the inlet 12c of the opening between the respective vertical portions 12a, 12b contact the upper portions of the pressure plates 13a, 13b installed on the inner sides of the respective vertical portions 12a, 12b, respectively, when the battery cell 3 continues to enter, each of the pressure plates 13a, 13b moves in the direction of being closer to the respective vertical portions 12a, 12b by a thickness of the battery cell 3, and at this time, the elastic means 14 moves while keeping both sides of the battery cell 3 under pressure.

In this way, the respective pressure plates 13a, 13b are pressed against both sides of the battery cell 3 in the thickness direction of the battery cell 3 by the elasticity of the elastic means 14 to pressure and fix both sides of the battery cell 3.

Meanwhile, after stacking the plurality of battery cells 3, when the stacked plurality of battery cells 3 is removed from the fork 10, the stacked plurality of battery cells 3 moves to the outside of the fork 10 through the inlet 12c of the opening between each of the vertical portions 12a, 12b, and each of the pressing plates 13a, 13b pressing on both sides of the thickness direction of the battery cells 3 moves in the direction of being close to each other by the elasticity of the elastic means 14 and returns to the initial position.

Here, the upper and lower edges of each of the pressure plates 13a, 13b contacting the lower portion of the battery cell 3 may be rounded to have a certain curvature. In other words, in order to minimize damage and breakage of the battery cell 3 contacting the upper and lower portions of the pressure plates 13a, 13b during entry and retraction of the battery cell 3 with the fork 10, the upper and lower edges of each pressure plate 13a, 13b contacting the lower portion of the battery cell 3 may be rounded to have a curvature.

As mentioned above, by rounding the upper and lower edges of each of the pressure plates 13a, 13b, damage to the battery cells 3 that contact the upper and lower edges of the pressure plates 13a, 13b can be prevented.

Here, the curvature of the upper and lower edges of the respective pressure plates 13a, 13b can be varied, and the shape can also be varied.

In one embodiment of the present invention, the upper and lower edges of each of the pressure plates 13a, 13b are rounded to have a certain curvature, but it is possible, and not limited to, that the mutually opposing inner upper edges of each of the vertical portions 12a, 12b are also rounded to have a certain curvature.

Meanwhile, the mutually opposing positions of the lower portion of the gripper 30 and the upper portion of the fork 10 may be provided with position sensors 70 so as to control the position of the gripper 30 in response to the position of the fork 10.

For this, the battery cell stacking jig 1 of the present invention may further include a control part (not shown).

According to the structure as described above, the TRF 50 moves to position the plurality of grippers 30 on the upper portion of the fork 10, but when the position sensor 70 of the grippers 30 detects the position of the fork 10 and transmits the detected signal to the control part, the control part can stop the movement of the TRF 50 and seat the battery cell 3 at the correct position of the fork 10.

Hereinafter, the operation process of a battery cell stacking jig by one embodiment of the present invention will be briefly described with reference to FIGS. 5 to 8.

First, after gripping the plurality of battery cells 3 with the plurality of grippers 30, the grippers 30 are moved to the upper portion of the fork 10 via the TRF 50.

At this time, the gripper 30, which has been moved to the upper portion of the fork 10 by the movement of the TRF 50, is positioned at an exact position of the upper portion of the fork 10 through the position sensor 70.

In this way, the gripper 30 located at the upper portion of the fork 10 moves downwardly toward the fork 10 while gripping the battery cell 3, and the lower portion of the battery cell 3 enters the opening 12c between the respective vertical portions 12a, 12b of the fork 10.

Here, the lower portion of the battery cell 3 entering the opening 12c between the respective vertical portions 12a, 12b contacts the upper portions of the pressing plates 13a, 13b installed on the inner sides of the respective vertical portions 12a, 12b, respectively, and then enters between the respective pressing plates 13a, 13b, and the respective pressing plates 13a, 13b move away from each other toward the respective vertical portions 12a, 12b in a direction corresponding to the thickness of the battery cell 3.

At this time, as the upper and lower edges of each of the pressing plates 13a, 13b are rounded, the lower portion of the battery cell 3 enters between the respective vertical portions 12a, 12b through the rounded portions of each of the pressing plates 13a, 13b.

In this way, the lower portion of the battery cell 3 that has entered between the respective vertical portions 12a, 12b contacts the seating portion 11, and the respective pressing plates 13a, 13b prevent the battery cell 3 from flowing while maintaining both sides of the battery cell 3 under pressure.

As described above, after the battery cells 3 are seated in each fork 10, each fork 10 is moved in a horizontal direction, and each battery cell 3 is stacked while being mutually adhered through adhesive surfaces (not shown) formed on both sides.

The stacked battery cells 3 are then separated from the fork 10 via another gripper (not shown) and a TRF (not shown) and transported to a post-process. In other words, the plurality of stacked battery cells 3 are gripped through another gripper that is moved to an upper portion of the fork 3 to move the stacked battery cells 3, and the gripped battery cells 3 are upwardly moved through an opening 12c between the respective vertical portions 12a, 12b, and then horizontally moved through another TRF and transported to a post-process.

At this time, the respective pressure plates 13a, 13b pressurizing both sides of the thickness direction of the battery cell 3 are moved in the direction of moving closer to each other by the elasticity of the elastic means 14 and return to the initial position.

### (Second embodiment)

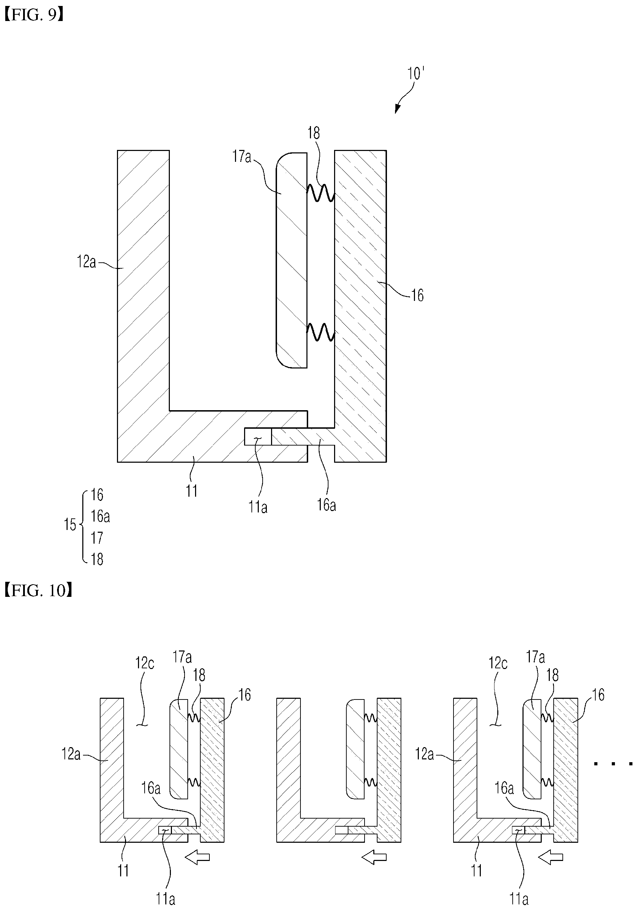

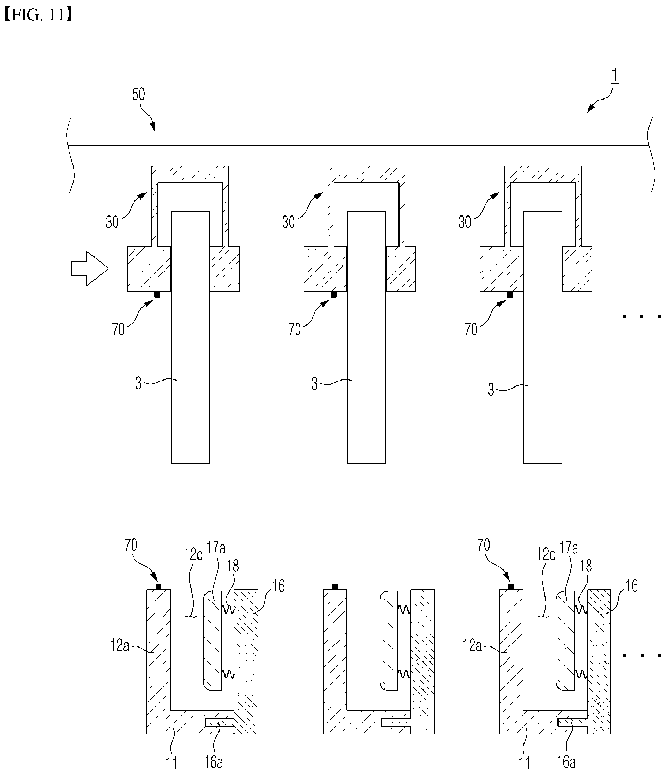

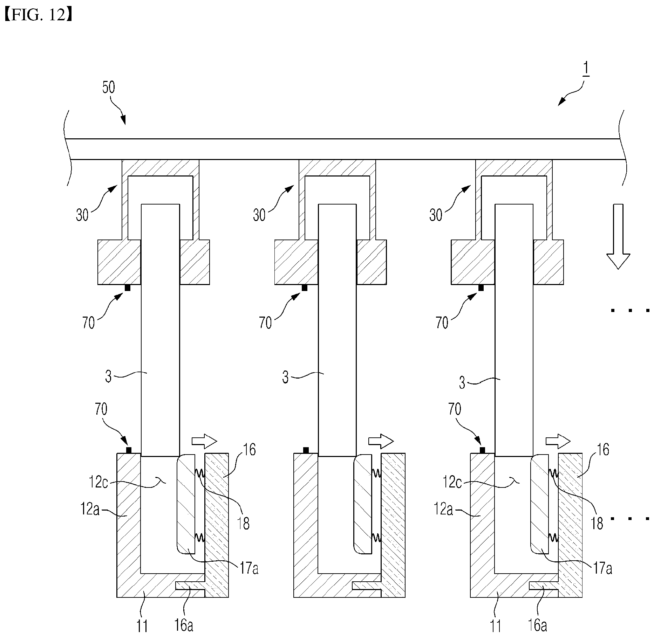

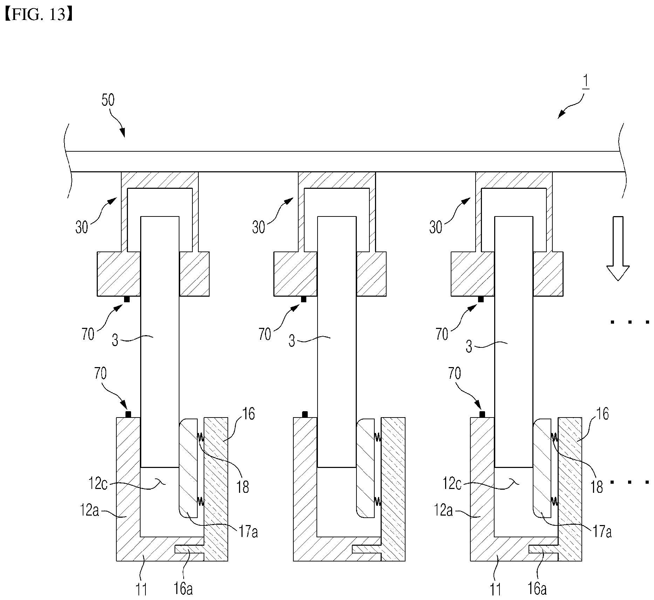

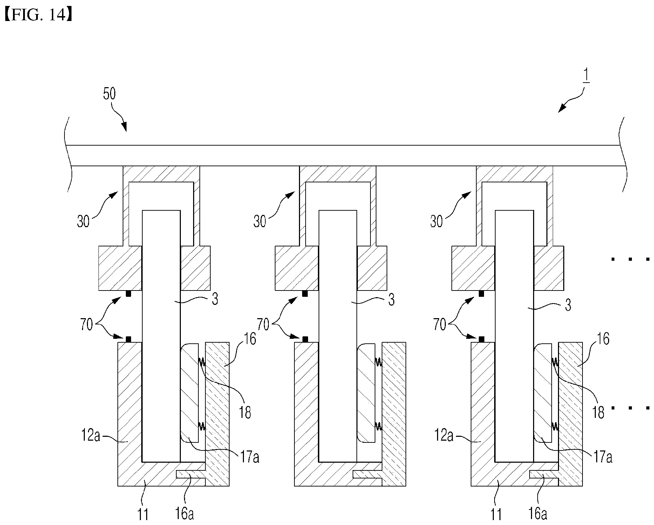

FIG. 9 is a top view schematically illustrating an adjustable fork of a battery cell stacking jig of a secondary battery according to another embodiment of the present invention. FIGS. 10 to 14 are diagrams schematically illustrating the operation of a battery cell stacking jig of a secondary battery by another embodiment of the present invention.

As illustrated in the figures, the battery cell stacking jig 1 by another embodiment of the present invention can be operated by adjusting the size of the inlet 12c of the fork 10' to correspond to various battery cells 3 having different thicknesses by partially changing the structure of the fork 10' on which the battery cells 3 are seated, and then seated and installed the battery cells 3 in the fork 10'.

Specifically, the fork 10' may include a seating portion 11 in which the lower portion of the battery cell 3 is seated, a vertical portion 12a formed vertically extending toward the gripper 30 at one side of the seating portion 11 and a moving pressure means 15 provided at the other end of the seating portion 11.

Here, the moving pressure means 15 may include a moving portion 16 formed vertically and movable in a horizontal direction with respect to the seating portion 11, a pressing plate 17a installed on an inner side of the moving portion 16, and at least one elastic means 18 connecting the pressing plate 17a and the moving portion 16 so that the pressing plate 17a moves elastically with respect to the thickness direction of the battery cell 3 entering the fork 10'.

For this, a coupling groove 11a is formed in the other end of the seating portion 11, and a moving piece 16a corresponding to the coupling groove 11a is protruding in the inner lower portion of the moving portion 16.

According to the structure as described above, with the moving piece 16a coupled to the coupling groove 11a, the moving portion 16 moves in a horizontal direction with respect to the seating portion 11, but moves to have an inlet 12c that is larger than the thickness of the battery cell 3.

In other words, when the thickness of the battery cell 3 is larger than the pre-set thickness, the moving portion 16 moves horizontally in a direction away from the vertical portion 12a, and when the thickness of the battery cell 3 is smaller than the pre-set thickness, the moving portion 16 moves horizontally in a direction closer to the vertical portion 12a, but moves to have an inlet 12c larger than the thickness of the battery cell 3.

In this case, the moving portion 16 may be horizontally movably installed on the seating portion 11 by an air cylinder (not shown) or a motor (not shown). Here, since the structure in which the moving portion 16 is moved horizontally by the air cylinder or the motor is a conventional structure, a detailed description will be omitted hereinafter.

Meanwhile, in this embodiment, the upper and lower edges of the pressure plate 17a contacting the lower portion of the battery cell 3 may be rounded to have a predetermined curvature.

In addition, the upper portion 12a of the vertical portion of the fork 10' opposite the moving pressing means 15 may also be rounded to have a predetermined curvature.

Hereinafter, the operation process of the battery cell stacking jig by another embodiment of the present invention will be briefly described with reference to FIGS. 10 to 14.

First, an air cylinder or a motor is driven to move the moving portion 16 in a horizontal direction to correspond to the thickness of the battery cell 3. At this time, the moving portion 16 is moved so as to have an inlet 12c larger than the thickness of the battery cell 3.

Then, after gripping the plurality of battery cells 3 with the plurality of grippers 30, the battery cells 3 are moved to the upper portion of the fork 10' via the TRF 50.

Meanwhile, the gripper 30, which has been moved to the upper portion of the fork 10' by the movement of the TRF 50, is positioned at an exact position of the upper portion of the fork 10' via the position sensor 70.

The gripper 30, which is thus positioned at the upper portion of the fork 10', moves downwardly toward the fork 10' while gripping the battery cell 3, and the lower portion of the battery cell 3 enters the inlet 12c of the opening between the vertical portion 12a and the moving portion 16 of the fork 10'.

Here, the lower portion of the battery cell 3 entering the opening 12c between the vertical portion 12a and the moving portion 16 touches the upper portion of the pressing plate 17a installed on the inner side of the vertical portion 12a, and then enters between the vertical portion 12a and the pressure plate 17a, and the pressure plate 17a moves toward the moving portion 16 corresponding to the thickness of the battery cell 3.

At this time, since the upper and lower edges of the pressure plate 17a are rounded, the lower portion of the battery cell 3 enters between the vertical part 12a and the pressure plate 17a through the rounded portion of the pressure plate 17a.

In this way, the lower portion of the battery cell 3 that has entered between the vertical portion 12a and the pressure plate 17a contacts the seating portion 11, and the pressure plate 17a prevents the battery cell 3 from flowing while keeping one side of the battery cell 3 pressurized.

In the present embodiment, the battery cell 3 is seated in the fork 10' with the plurality of grippers 30 after moving the moving portion 16 in a horizontal direction to correspond to the thickness of the battery cell 3, After the battery cell 3 is entered and seated in the fork 10' with the plurality of grippers 30, the moving portion 16 is moved in a horizontal direction so as to be positioned corresponding to the thickness of the battery cell 3, and the battery cell 3 is fixed by pressurizing the battery cell 3 through the pressure plate 17a provided in the moving portion 16, and various other changes are possible.

As above, the present invention has been described in more detail through the drawings and embodiments. However, since the configuration described in the drawings or embodiments described herein is merely one embodiment of the present invention and do not represent the overall technical spirit of the invention, it should be understood that the invention covers various equivalents, modifications, and substitutions at the time of filing of this application.

### [Description of Reference Numerals]

1: battery cell stacking jig
3: battery cell
10, 10': fork
11: seating portion
11a: coupling groove
12a, 12b: vertical portion
12c: inlet
13: pressure means
13a: pressure plate
14: elastic means
15: moving pressure means
16: moving portion
16a: moving piece
17a: pressure plate
18: elastic means
30: gripper
50: TRF
70: position sensor

## Claims

1. A battery cell stacking jig for stacking a plurality of battery cells of a secondary battery,
the battery cell stacking jig comprising:
a fork supporting both ends of the battery cells so that the plurality of battery cells are seated therein, and disposed in a plurality at a certain distance apart with respect to a horizontal direction;
a gripper movably provided on an upper portion of the fork, and disposed in a plurality with respect to the horizontal direction to load a battery cell perpendicularly to the fork such that the battery cell is seated in the fork; and
a TRF (Transfer) connected to the plurality of grippers to move the grippers to the upper portion of the fork,
wherein the fork is to fix the battery cell by applying pressure on both sides of the thickness direction of the battery cell.

2. The battery cell stacking jig of claim 1, wherein the fork comprises a seating portion in which a lower portion of the battery cell is seated, vertical portions extending perpendicularly from both ends of the seating portion, and pressure means provided on each opposing inner side of the vertical portions.

3. The battery cell stacking jig of claim 2, wherein the pressure means comprises pressure plates installed opposite each other on an inner side of the vertical portion, and at least one elastic means connecting the pressure plates and the vertical portion such that each pressure plate elastically moves to apply pressure to both sides of the battery cell entering the fork.

4. The battery cell stacking jig of claim 3, wherein the upper and lower edges of the pressure plate contacting the lower portion of the battery cell is rounded to have a curvature.

5. The battery cell stacking jig of claim 1, wherein the fork comprises a seating portion in which the lower portion of the battery cell is seated, a vertical portion formed perpendicularly extending from one side of the seating portion, and movable pressing means provided at a lateral portion of the seating portion.

6. The battery cell stacking jig of claim 5, wherein the movable pressure means comprises a moving portion formed vertically and movable in a horizontal direction with respect to the seating portion, a pressing plate installed on an inner side of the moving portion, and at least one elastic means connecting the pressure plate and the moving portion such that the pressure plate elastically moves and presses against one side surface of the battery cell entering the fork.

7. The battery cell stacking jig of claim 6, wherein a coupling groove is formed at the other end of the seating portion, a moving piece corresponding to the coupling groove is protruding from the inner lower portion of the moving portion, and with the moving piece coupled to the coupling groove, the moving portion is moved in a horizontal direction with respect to the seating portion.

8. The battery cell stacking jig of claim 7, wherein the moving portion is movable with respect to the seating portion by means of an air cylinder or a motor.

9. The battery cell stacking jig of claim 6, wherein the upper and lower edges of the pressure plate contacting the lower portion of the battery cell are rounded to have a curvature.

10. The battery cell stacking jig of claim 1, wherein the lower portion of the gripper and the upper portion of the fork are each provided with a position sensor.
